# EUROPEAN PATENT SPECIFICATION

(11) **EP 0 685 974 B1**
(45) Date of publication and mention of the grant of the patent: **02.01.2002**
(21) Application number: 95303729.8
(22) Date of filing: 31.05.1995
(51) Int. Cl.: H04Q 7/38

(54) **Dual stage approach for evaluating a received signal in a communications system**
Zweistufige Auswertung eines Empfangssignals in einem Kommunikationssystem
Evaluation en deux étapes d'un signal reçu dans un système de communication

(30) Priority: 01.06.1994 US 252553
(43) Date of publication of application: 06.12.1995
(73) Proprietor: Nortel Networks Limited, Montreal, Quebec H2Y 3Y4 (CA)
(72) Inventor: Meche, Paul S., Richardson, Texas 75082 (US); Willhoff, Steven J., Richardson, Texas 75081 (US)
(74) Representative: Ryan, John Peter William

(56) References cited:
- EP-A- 0 465 443
- EP-A- 0 625 863
- WO-A-91/19403
- US-A- 4 556 760

## Description

The invention relates generally to a method and apparatus in a wireless communications system to evaluate a received signal. Specifically, a wireless station evaluates the received signal based on both a long term average and a short term current value of the strength of the received signal.

When a wireless station is in "standby" mode waiting to initiate a call or to receive a call, the wireless station locks onto or tunes to a particular control channel (CCH). As a mobile wireless station moves around geographically, the mobile station must periodically change to a different CCH according to certain criteria.

It is important to accurately evaluate a received signal in order to, e.g., correctly detect the need to switch to a new control channel (CCH) at the appropriate coverage point. This helps maintain both the integrity of the frequency plan defined by a wireless operator, as well as the wireless subscriber's service quality. A mobile station utilizes the signal strength of the CCH to help determine when to switch to a new CCH.

Several approaches currently exist to assess the received signal strength. Basic categories can be categorized as "short term" and "long term" approaches.

Methods that rely exclusively on short term measurements are subject to error due to the highly fluctuating nature of the signal. These methods rely on periodic sampling of the signal at intervals of several or seconds. This practice often contributes to poor decisions due to the effects of short fades on the signal.

Methods that utilize continual measurements at relatively frequent intervals and then average them over a 'long' period of time provide a more even view of the received signal. This averaging approach or long term method, smoothes out the affects of short term fades in the signal. Thus, "long" term methods are less over reactive to fluctuating signals. However, averaging methods are flawed since they may build in a historical bias to the signal strength average.

In mobile wireless systems, methods that average over long periods of time tend to include measurements from different geographic locations. Therefore, the long term average may also contain a spatial historical bias. In other words, using an average at a current location to evaluate a CCH signal at the current location can be biased by measurement samples from other geographic locations taken previously. Thus, the historical bias may trigger action based on events that occurred not only in the past, but also in different geographic locations. This historical bias can occur frequently in an urban environment due to the shadowing effects of buildings.

A more specific example of how shadowing can cause the historical bias to cause an erroneous trigger condition is as follows. As a mobile is subjected to a shadow effect, older, higher strength, measurements are replaced in the average by more current, lower strength, measurements and the average signal strength begins to fall. This is consistent with the characteristics of averaging algorithms being a "trend follower." As the mobile begins to move out of the shadow effect, the actual current signal strength begins to rise but the long term average keeps falling. Thus, the long term average can indicate that action is required (e.g. CCH reselect) when in fact action is not required at the instant the trigger, indicating the need to reselect a CCH, is invoked.

Specification No. US-A-4,556,760 describes a mobile communications system in which a hand-off filter is incorporated into decision making circuitry controlling the hand-over process. Specification No. EP-A-0,625,863 (published 23 November 1994) describes a mobile communications system in which a handoff trigger is determined by comparison of long term and short term signal strength measurements with a threshold value.

Overreacting to fluctuating signals can have a detrimental impact on a wireless station's battery life and therefore operational time and also increases transaction processing on the switching system. Additionally, overreacting increases the possibility of missing terminations (incoming calls) since the mobile station would be involved in unnecessary reselection processing. Not reacting quickly enough to changing signal conditions can result in service interruption and expensive processing to re-acquire service.

It is therefore an object of the invention to provide a dual stage method and apparatus for accurately evaluating a received signal by providing the mobile station with a concise and consistent measure of a received signal strength, in order to perform such tasks as determining a signal strength based trigger to reselect a control channel (CCH) or a traffic channel.

It is a further object of this invention to determine the signal strength based trigger at the appropriate coverage point and in a manner that overcomes the shortcomings found in single stage (short or long term) received signal evaluation approaches.

It is an object of the invention to avoid poor trigger decisions caused by the highly fluctuating nature of the signal, e.g. short term fades in the signal, as well as to eliminate the occurrence of false triggers caused by the historical bias that may exist from a long term averaging process.

The dual stage approach may be used to indicate a signal strength based trigger condition when the strength of the received signal from the serving control channel falls below predetermined thresholds or when the strength of a neighbouring control channel is above predetermined thresholds.

These and other objects of the invention are solved by the features of independent claims 1, 9, 15 and 16, respectively.

Thus, these and other objects of the invention are accomplished by maintaining both a long term representation of the signal and a short term representation of the current signal level. A signal strength based trigger condition exists if both the long term average and short term value exceed respective predetermined thresholds. The mobile station compares the long term representation to a threshold value to determine an initial trigger for a reselect condition. The averaging process removes the effects of short term fades in the signal that may cause a premature reselect decision due to these short term signal fluctuations. This initial trigger is then qualified by examining the short term current value of the signal. The actual signal strength based trigger is only realized when both long and short term values exceed appropriate threshold values.

The mobile station requires certain information to develop and maintain the long term averages and short term values. This information includes which control channels are available and appropriate threshold values associated with both the potential control channels and the serving control channel. Additionally, the mobile must know how often to sample each control and/or traffic channel to update the long term average and short term values of the received signal strength of the associated control and/or traffic channel.

Additional features and advantages of the invention will be made clear from the following detailed description and the accompanying drawings, in which:
Fig. 1 shows a graph of the short term and long term measurements of a received signal;
Fig. 2a shows the cell environment in which the present invention may be practised;
Figs. 2b and 2c show other cell structures in which the present invention may be practised;
Fig. 3 shows a block diagram of a Mobile Station;
Fig. 4 shows an example of long term and short term sample buffers;
Fig. 5 shows a flow diagram of a first embodiment of the invention;
Fig. 6 shows a flow diagram of a second embodiment of the invention.

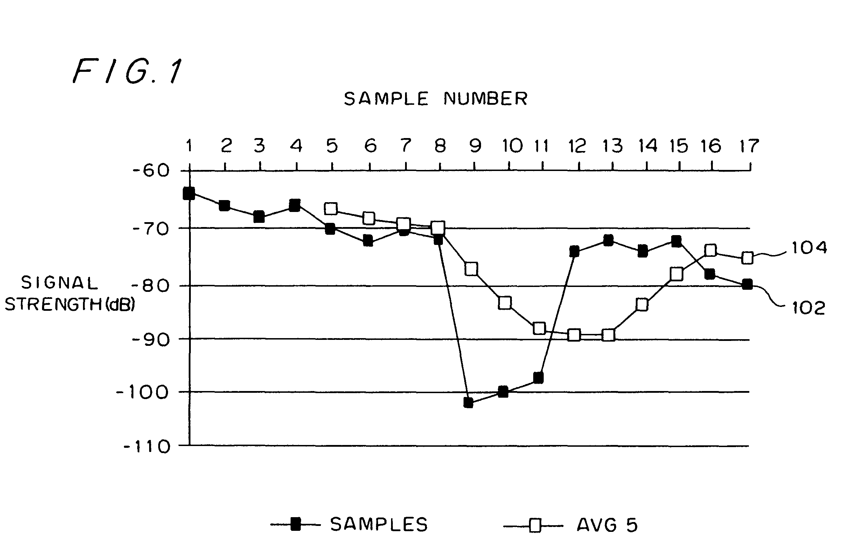

Referring to Fig. 1, curves for both short term values (individual samples) 102 and a long term (five sample) average 104 are shown indicating the strength of a received signal. This received signal may be from a serving control channel, an adjacent control channel or a traffic channel. As can be seen in Fig. 1, the long term average generally tracks the trend of the short term average. The rapid decrease in the received signal strength, typical of the shadow effect, is shown by samples 8-11 of the short term values. If only a short term signal strength representation were used, an erroneous trigger event could occur. When the strength of the received signal is rising, as shown in samples 10-13, the long term average does not reflect the improvement in the present signal strength until sample 14, potentially leading to an erroneous trigger condition if only the long term average is utilized. A dual stage triggering approach applied to the data shown in Fig. 1 does not result in the erroneous triggers associated with single stage approaches, since both the long and short term values must fall below threshold values to cause a trigger.

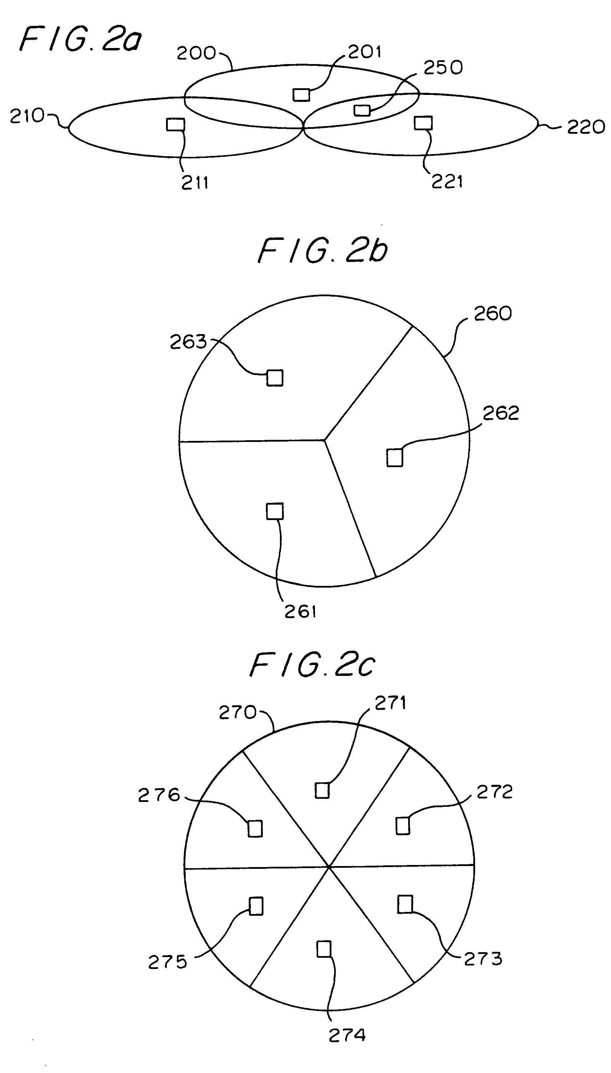

Figs. 2a -2c show the environment in which the dual stage method and apparatus of the present invention operates and where the samples shown in Fig. 1 may be received by a mobile station. In Fig 2a, a mobile station 250 is travelling in an overlapping region of cell sites 200 and 220, which are respectively controlled by controllers 201 and 221. The dual stage trigger approach of the present invention balances the effects of the long term signal characteristics with the current, short term, assessment of the signal so that the mobile performs the appropriate trigger detection to switch to an appropriate control channel at the appropriate time.

Figs. 2b and 2c depict alternate cell structures. In Fig. 2b the region 260 is divided into three (120°) cells with cell controllers 261, 262 and 263 provided for each of the cells. Fig. 2c shows region 270 divided into six (60°) cells with cell controllers 271-276 provided for the corresponding cells.

Assuming that mobile 250 is presently locked onto CCH 201 (i.e. CCH 201 is the serving CCH), mobile 250 maintains a list of potential new control channels. In some embodiments, this information relating to neighbouring control channels may be provided by the serving CCH. In other embodiments the control channels are assigned predetermined frequencies and the mobile determines adjacent control channels by sampling the control channel frequencies. The mobile samples these specific control channel frequencies looking for an appropriate new serving CCH.

As shown, in Fig. 2a, control channels 211 and 221 are determined to be neighbouring control channels. In some systems control channels are designated by a frequency. In other systems a control channel may be designated according to a time slot or a code value (e.g., for spread spectrum applications) on a particular frequency. In order to maintain service quality, mobile 250 must determine when to switch from CCH 201 to neighbouring control channels 211 or 221 according to the received signal strength of the neighbouring control channels as well as the received signal strength of the serving CCH as monitored by the mobile station. In addition to identifying a control channel by frequency (or time slot or code) and type, the mobile must also determine appropriate thresholds and sampling intervals. This information can be provided by the serving CCH or be predetermined according the kind of system in which the mobile is operating.

This approach is equally suited to evaluating the received signal strength of serving and neighbouring traffic channels and switching traffic channels according to the dual stage approach.

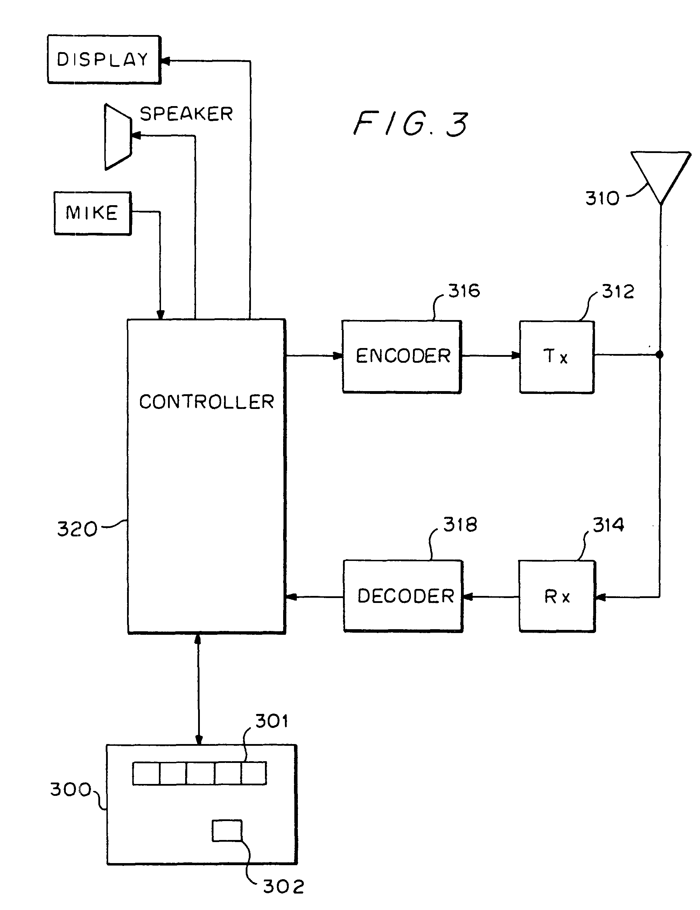

The mobile is shown conceptually in Fig. 3. The mobile contains antenna 310, transmitter and receiver 312 and 314, encoder and decoder 316 and 318, and controller 320, the controller 320 including a processor. The antenna 310 and receiver 314 allow the mobile to receive a signal and to determine the strength of the received signal. The particular details comprising the mobile unit are well known and conventional in the art and certain details are therefore not included in the figure. Mobile 250 contains memory 300 in which the table of control channels and related information, along with long and short term averages, 301 and 302, may be stored.

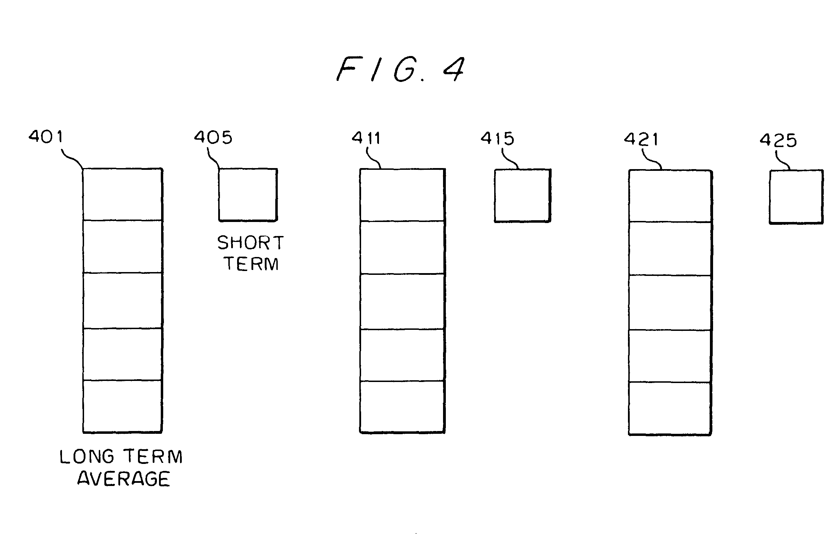

When the mobile 250 locks onto CCH 201, the mobile determines adjacent control channels or is provided this information by the serving CCH 201. The mobile station periodically monitors the signal strength of each CCH on the table of adjacent control channels as well as the serving CCH on which the mobile is presently tuned. The mobile uses these periodically monitored signals to establish and update a long term average and short term value for each CCH, as shown, e.g., in Fig. 4.

Thus, the mobile will maintain a long term average 401, 411, 421 for each identified neighbour as well as for the serving control channel. The long term average consists of the average of the most recent series of short term signal strength measurements, as shown in Fig. 4. Of course, the number of samples making up the long term value can vary.

The mobile will also maintain a short term value of signal strength 405, 415, 425 for each neighbour as well as for the serving CCH. While the short term measurements 405, 415 and 425 are depicted in Fig. 4 as being comprised of one sample, it is also possible to use an average of several samples to form the short term sample. Averaging over several measured samples to obtain the short term signal strength measurement avoids problems associated with Rayleigh fades, which can be a frequent occurrence in the mobile communications environment.

By way of example, four samples may be used to form a short term signal strength measurement. In other words, the short term value is an average of several samples. The long term average is an average of the short term values. Thus, e.g., if the long term average contains five short term values, the long term average in this scenario, would be an average of 20 actual samples. Other numbers of samples can of course be used to determine the short term signal strength value as well as the long term average.

The mobile must also sample each CCH at an appropriate interval. As previously discussed, this sampling rate may be provided by the CCH on which the mobile is tuned, or can predetermined and loaded into program memory of controller 320, according to particular system requirements and capabilities.

In one embodiment, the minimum time between two consecutive measurements on the same control channel is 5 ms and the maximum time between two consecutive measurements on the same control channel is 40 ms. In other embodiments, the different maximum and minimum times may be preferred. The averaging of the signal strength is typically done in dBm units.

This modified IS-54-B environment includes digital control channels (DCCH) which provide the mobile station with specific information which is used by the mobile station to sample the serving DCCH as well as neighbouring control channels. This information is broadcast on a broadcast control channel (BCCH) by the DCCH. The DCCH provides the mobile station a list of the neighbouring control channels which the mobile station enters on a neighbour table. The DCCH also provides the mobile station the sampling interval which represents the basic time interval between consecutive signal strength measurements of the short term signal strength value. The sampling interval is counted in "frames," i.e. a particular CCH must be sampled within a specified number of frames. Since frames have a fixed size and duration, a frame defines a unit of time (e.g. a TDMA frame = 40ms, a superframe = 640ms) and is a convenient way to specify time in wireless systems.

In this embodiment, the mobile station measures the signal strength of the serving Digital Control Channel (DCCH) or a neighbouring control channel each time its associated measurement interval lapses. As an example, assume the DCCH has provided the mobile station with information of sixteen neighbouring control channels. Thus, the neighbour table contains 16 entries.

Whenever there is a change in either the sampling interval or the neighbour table, the mobile station computes the measurement interval for each entry in the neighbour table. In addition, the measurement interval (or sample interval) at which the short term signal strength of the serving DCCH is provided.

The mobile station keeps a running average (i.e. the long term average) of the last five signal strength measurements for each measured frequency (i.e. each control channel). Additionally, the mobile station keeps a running average of the serving CCH, if any, also comprised of the last five signal strength measurements. Thus, in this example, 17 averages are maintained, 16 for the neighbouring channels and one for the serving channel. These values are used for control channel reselection as is described further below. The mobile station keeps a running average of the last two samples for the short term signal strength measurement for each of the 17 control channels.

Upon locking on a control channel, the mobile resets a flag indicating that valid signal strength measurement values are not available. After collecting 5 signal strength measurements for each entry in the neighbour table, the flag is set to show that valid long term signal strength measurements are available. In this embodiment, the short term signal strength measurements may be formed by averaging several adjacent samples.

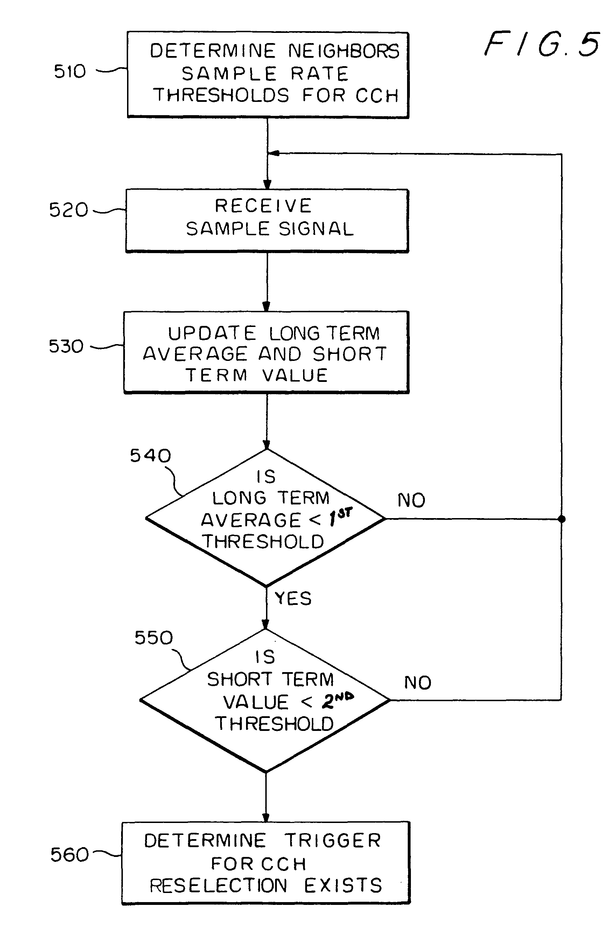

Referring now to Fig. 5, the method of operation of an embodiment of the invention is shown in which the mobile station determines the need to reselect a control channel according to the long and short term average for the serving CCH. Assume for ease of explanation, that the mobile uses a single sample to represent the short term signal strength value and averages five samples to obtain the long term average. The mobile station determines in step 510, the adjacent control channels, the appropriate sample rate for the neighbouring CCHs and the serving CCH, and appropriate threshold values. As previously indicated, these parameters may be provided to the mobile by the serving CCH. Alternately, any or all of the required parameters, including the threshold values and/or the sample rates may be predetermined.

The method described in Figure 5 is typically controlled by software stored in the mobile and implementation thereof is controlled by controller 320.

The mobile station samples the received signal strength for each potential CCH and the serving CCH, in step 520. For each sample taken at step 520, the long term average is recalculated (average of the last five received samples) and the short term average is replaced by the updated value in step 530 to maintain the long and short term values shown in Fig. 4 for each CCH (the potential CCHs and the serving CCH). Sampling step 520 and updating step 530 are performed for each CCH at the appropriate rate determined by the sampling interval.

At step 540, the mobile determines if the long term average of the serving CCH is below a predetermined threshold. If so, the mobile station determines in step 550 if the short term average is below a predetermined threshold. If either step 540 or 550 determines that the long or short term values are above the respective threshold, the system returns to step 520 to continue sampling.

The thresholds utilized in steps 540 and 550 for the long term average and the short term average are different. Utilizing separate thresholds has advantages such as allowing the system to account for the trending contained in the long term average or to set up for expected trigger activities prior to an actual trigger occurring.

Finally, in step 560, if both the long term average and short term values of the serving CCH are below the respective predetermined thresholds, the mobile determines that a trigger for CCH reselection exists and reselects a CCH utilizing the long and short term signal strength measurements maintained for the neighbouring channels. Reselection of the CCH may involve not only the received signal strength measurements (received power), but may also be based on such criteria as path loss, duration of time factors for the signal measurements, and other criteria known to one of ordinary skill in the art. The neighbouring control channel that best satisfies the criteria associated with the particular system is selected as the new CCH on which the mobile will tune.

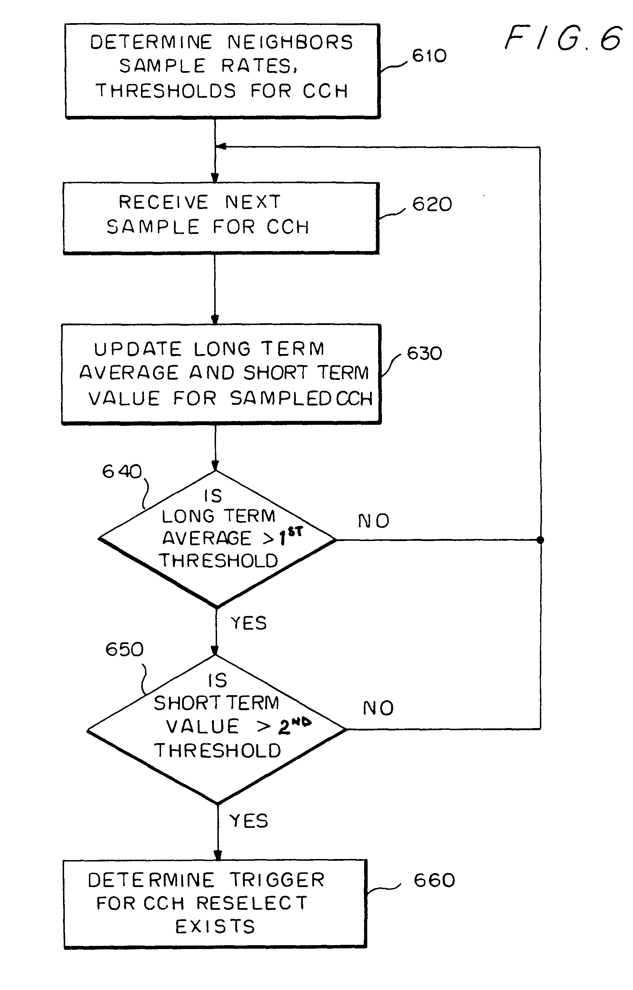

In another embodiment, the mobile checks the strength of the neighbouring control channels to determine the need for a CCH reselect. If the signal received from a particular neighbouring CCH exceeds a certain threshold value according the dual stage approach, that particular CCH is reselected as the serving CCH for the mobile. Referring to Fig. 6, the mobile determines the neighbouring control channels, the sample rate for each of the control channels and the appropriate thresholds in step 610. As with the previous embodiment, any or all of these parameters may be supplied by the serving CCH or may be predetermined and stored in the mobile station.

The mobile samples the signal strength in step 620. This step is repeated for each designated CCH at the appropriate sample rate. After receiving each sample, the mobile updates the long and short term averages in step 630 to maintain the long and short term average. In step 640, the mobile determines for the CCH whose long average and short term signal value was updated in step 630, if the long term average is greater than the threshold value. The mobile then checks to see if the short term value is also greater than the short term threshold value. Note that in some embodiments, it may be more efficient to check the short term value first and then check the long term average. The threshold values checked in steps 640 and 650 differ according to the needs of the particular system. If both the short term value and the long term average of a neighbouring CCH is greater than the threshold values, then the mobile reselects this CCH as the serving CCH for the mobile. Of course, additional criteria may be considered in reselecting the CCH, such as signal path loss criteria, as discussed previously. If either the short term value or the long term average are less than their respective threshold values, the system returns to step 620 to continue sampling received signals.

The method described in Figure 6 is typically controlled by software stored in the mobile and implementation thereof is controlled by controller 320.

Of course a combination of the embodiments shown in Figs. 5 and 6 may be utilized to determine when to reselect a control channel. Specifically, the trigger decision may be based both on the long term average and short term value of the serving CCH falling below respective threshold values and/or on a long term average and short term value of the received signal strength measurements of one or more of the neighbouring control channels exceeding threshold values.

For both embodiments shown in Figs. 5 and 6, the averaging approach improves the decision process by removing the effects of short term fades in the signal that may cause premature action triggers. This initial trigger is then qualified by examining the short term current value of the signal. The actual action trigger is only realized when both short term and long term values indicate that the action thresholds have been exceeded. This qualification eliminates the occurrence of false triggers exhibited by the historical bias that may exist as discussed above and shown in the graphic examples.

Again, the methods and apparatus described above apply equally to measuring the signal strength of the serving traffic channel and neighbouring reference channels, a reference channel being a traffic, control or beacon (or pilot) channel. When the signal strength of the serving traffic channel falls below predetermined thresholds, according to the dual stage approach, a traffic channel signal strength trigger exists to switch the call to a traffic channel in a different coverage area. Similarly if neighbouring reference channels rise above specified thresholds, a traffic channel switch may be indicated.

While preferred embodiments of the invention have been described, modifications of the described embodiments may become apparent to those of ordinary skill in the art, following the teachings of the invention, without departing from the scope of the present invention as set forth in the appended claims.

## Claims

1. A method of determining a condition for handoff of a telephone call on a particular channel to another channel of a mobile station (250) between first and second base stations in a wireless communications system comprising a plurality of mobile stations, wherein said handoff condition is determined from measurement of a short term average and a long term average of the strength of a received signal; the method comprising the steps of:
determining a first, long term representation (301, 401, 411, 421) of a current signal level on a channel of the wireless communications system;
determining a second, short term representation (302, 405, 415, 425) of the current signal level; **characterised by** the steps of
comparing the long term representation to a first threshold (540, 640);
separately from said long term comparing step, comparing the short term representation to a second threshold (550, 650) which is different from the first threshold;
determining (560, 660) whether a hand off condition has been met based on result of both said long and short term comparing steps; and
initiating said hand off when said hand off condition has been met.

2. A method as claimed in claim 1, **characterised in that** the long term comparing step comprises the step of providing the second threshold.

3. A method as claimed in claim 1, **characterised in that**:
the step of determining a long term representation of a signal level comprises determining a long term representation of a signal level on said particular channel;
the step of determining a short term representation of a signal level comprises determining a short term representation of a signal level on said particular channel; and that
the step of determining whether said hand off condition has been met comprises determining that said hand off condition has been met only if the first threshold exceeds the long term representation and the second threshold exceeds the short term representation.

4. A method as claimed in claim 1, **characterised in that**:
the step of determining a long term representation of a signal level comprises determining a long term representation of a signal level on said other channel;
the step of determining a short term representation of a signal level comprises determining a short term representation of a signal level on said other channel; and that
the step of determining whether said hand off condition has been met comprises determining that said hand off condition has been met only if the long term representation exceeds the first threshold and the short term representation exceeds the second threshold.

5. A method as claimed in claim 1, further **characterised by**:
determining long term representations of signal levels on further channels;
determining short term representations of signal levels on said further channels;
comparing the long term representations and the short term representations of the signal levels on said further channels to said first and second thresholds respectively; and
determining that said hand off condition has been met if the long term representation of the signal level on any of said further channels exceeds the first threshold and the short term representation of the signal level on the same further channel exceeds the second threshold.

6. A method as claimed in any one of the preceding claims **characterised in that** the particular channel and the other channel are traffic channels.

7. A method as claimed in any one of claims 1 to 5, **characterised in that** the particular channel is a traffic channel and the other channel is a reference channel.

8. A method as claimed in any one of claims 1 to 5, **characterised in that** the particular channel and the other channel are control channels.

9. A cellular wireless communications system comprising a plurality of mobile stations, wherein a condition for handoff of a mobile station from a first to a second base station is determined from measurement of a short term average and a long term average of the strength of a received signal; wherein the system comprises:
a plurality of base stations, each base station having a plurality of channels whereby said mobile stations are served;
means for determining a first, long term representation (301, 401, 411, 421) of a current signal level on a channel of the cellular communications system;
means for determining a second, short term representation (302, 405, 415, 425) of the current signal level on said channel; **characterised in that** the system comprises
means for comparing the long term representation to a first threshold (540, 640);
separate from said long term comparing means, means for comparing the short term representation to a second threshold (550, 650) which is different from the first threshold;
means for determining (560, 660) whether a hand off condition has been met based on result of both said long and short term comparing means; and
means for initiating hand off of said mobile station when said hand off condition has been met.

10. A system as claimed in claim 9, **characterised in that**:
the means for determining a long term representation determines a long term representation of a signal level on a channel currently assigned to the mobile station;
the means for determining a short term representation determines a short term representation of the signal level on said currently assigned channel; and that
the means for determining whether said hand off condition has been met determines that said hand off condition has been met only if the first threshold exceeds the long term representation and the second threshold exceeds the short term representation.

11. A system as claimed in claim 10, **characterised in that**:
the means for determining a long term representation determines a long term representation of a signal level on a channel other than a channel currently assigned to the mobile station;
the means for determining a short term representation determines a short term representation of a signal level on said other channel; and that
the means for determining whether said hand off condition has been met determines that said hand off condition has been met only if the long term representation exceeds the first threshold and the short term representation exceeds the second threshold.

12. A system as claimed in claim 11, **characterised in that**:
the means for determining long term representations is operable to determine long term representations of signal levels on further channels;
the means for determining short term representations is operable to determine short term representations of signal levels on said further channels; and that
the means for determining whether said hand off condition is met is operable to compare the long term representations and the short term representations of the signal levels on said further channels to said first and second thresholds respectively, and to determine that said hand off condition has been met if the long term representation of the signal level on any of said further channels exceeds the first threshold and the short term representation of the signal level on the same further channel exceeds the second threshold.

13. A system as claimed in claim 10, **characterised in that** the means for determining the long term representation, the means for determining the short term representation, the means for comparing the long term representation to the first threshold, the means for comparing the short term representation to the second threshold, and the means for determining whether said hand off condition has been met are resident in the mobile station.

14. A system as claimed in claim 10, further comprising a base station controller (201, 221), **characterised in that** the means for determining the long term representation, the means for determining the short term representation, the means for comparing the long term representation to the first threshold, the means for comparing the short term representation to the second threshold, and the means for determining whether said hand off condition has been met are resident in the base station controller.

15. A mobile station (250) for operation in a wireless cellular communications system comprising a plurality of mobile stations, wherein a condition for handoff of a mobile station from a first to a second base station is determined from measurement of a short term average and a long term average of the strength of a received signal; wherein the mobile station, comprises:
means for determining a first, long term representation (301, 401, 411, 421) of a current signal level on a channel of the cellular communications system which is assigned to the mobile station;
means for determining a second, short term representation (302, 405, 415, 425) of the current signal level on said channel; **characterised in that** the mobile station comprises
means for comparing the long term representation to a first threshold (540, 640);
separately from said long term comparing means, means for comparing the short term representation to a second threshold (550, 650) which is different from the first threshold;
means for determining (560, 660) whether a hand off condition has been met based on result of both said long and short term comparing means; and
means for initiating hand off of said mobile station when said hand off condition has been met.

16. A base station controller (201, 221) for a wireless cellular communications system comprising a plurality of mobile stations (250), wherein a condition for handoff of a mobile station from a first to a second base station is determined from measurement of a short term average and a long term average of the strength of a received signal; wherein the base station controller comprises:
means for determining a first, long term representation (401, 411, 421) of a current signal level on a channel controlled by the base station controller;
means for determining a second, short term representation (405, 415, 425) of the current signal level on said channel; **characterised in that** the base station controller comprises
means for comparing the long term representation to a first threshold (540, 640);
separate from said long term comparing means, means for comparing the short term representation to a second threshold (550, 650) which is different from the first threshold;
means for determining (560, 660) whether a hand off condition has been met based on result of both said long and short term comparing means; and
means for initiating hand off of a mobile station when said hand off condition has been met.

## Patentansprüche

1. Verfahren zur Bestimmung einer Bedingung zur Übergabe einer Telefongesprächsverbindung auf einem bestimmten Kanal zu einem anderen Kanal einer Mobilstation (250) zwischen ersten und zweiten Basisstationen in einem Funk-Kommunikationssystem, das eine Vielzahl von Mobilstationen umfaßt, wobei die Übergabebedingung aus einer Messung eines Kurzzeit-Mittelwertes und eines Langzeit-Mittelwertes der Stärke eines empfangenen Signals bestimmt wird, wobei das Verfahren die folgenden Schritte umfaßt:
Bestimmen einer ersten Langzeit-Darstellung (301, 401, 411, 421) eines derzeitigen Signalpegels auf einem Kanal des Funk-Kommunikationssystems;
Bestimmen einer zweiten Kurzzeit-Darstellung (302, 405, 415, 425) des derzeitigen Signalpegels; **gekennzeichnet durch** die folgenden Schritte:
Vergleichen der Langzeit-Darstellung mit einem ersten Schwellenwert (540, 640);
getrennt von dem Langzeit-Vergleichsschritt, Vergleichen der Kurzzeit-Darstellung mit einem zweiten Schwellenwert (550, 650), der von dem ersten Schwellenwert verschieden ist;
Bestimmen (560, 660), ob eine Übergabebedingung erfüllt ist, auf der Grundlage des Ergebnisses sowohl der Langzeit- als auch der Kurzzeit-Vergleichsschritte, und
Einleiten der Übergabe, wenn die Übergabebedingung erfüllt wurde.

2. Verfahren nach Anspruch 1, **dadurch gekennzeichnet, daß** der Langzeit-Vergleichsschritt den Schritt der Bereitstellung des zweiten Schwellenwertes umfaßt.

3. Verfahren nach Anspruch 1, **dadurch gekennzeichnet, daß**:
der Schritt der Bestimmung einer Langzeit-Darstellung eines Signalpegels die Bestimmung einer Langzeit-Darstellung eines Signalpegels auf dem bestimmten Kanal umfaßt,
der Schritt der Bestimmung einer Kurzzeit-Darstellung eines Signalpegels die Bestimmung einer Kurzzeit-Darstellung eines Signalpegels auf dem bestimmten Kanal umfaßt, und daß
der Schritt der Bestimmung, ob die Übergabe-Bedingung erfüllt wurde, die Feststellung, daß die Übergabebedingung erfüllt wurde, nur dann umfaßt, wenn der erste Schwellenwert die Langzeit-Darstellung übersteigt, und der zweite Schwellenwert die Kurzzeit-Darstellung übersteigt.

4. Verfahren nach Anspruch 1, **dadurch gekennzeichnet, daß**:
der Schritt der Bestimmung einer Langzeit-Darstellung eines Signalpegels die Bestimmung einer Langzeit-Darstellung eines Signalpegels auf dem anderen Kanal umfaßt,
der Schritt der Bestimmung einer Kurzzeit-Darstellung eines Signalpegels die Bestimmung einer Kurzzeit-Darstellung eines Signalpegels auf dem anderen Kanal umfaßt, und daß
der Schritt der Bestimmung, ob die Übergabebedingung erfüllt wurde, die Bestimmung, daß die Übergabebedingung erfüllt wurde, nur dann umfaßt, wenn die Langzeit-Darstellung den ersten Schwellenwert übersteigt, und die Kurzzeit-Darstellung den zweiten Schwellenwert übersteigt.

5. Verfahren nach Anspruch 1, das weiterhin durch die folgenden Schritte **gekennzeichnet ist**:
Bestimmung von Langzeit-Darstellungen von Signalpegeln auf weiteren Kanälen,
Bestimmung von Kurzzeit-Darstellungen von Signalpegeln auf den weiteren Kanälen,
Vergleichen der Langzeit-Darstellungen und der Kurzzeit-Darstellungen der Signalpegel auf den weiteren Kanälen mit dem ersten bzw. zweiten Schwellenwert, und
Bestimmen, daß die Übergabebedingung erfüllt wurde, wenn die Langzeit-Darstellung des Signalpegels auf irgendeinen der weiteren Kanäle den ersten Schwellenwert übersteigt und die Kurzzeit-Darstellung des Signalpegels auf dem gleichen weiteren Kanal den zweiten Schwellenwert übersteigt.

6. Verfahren nach einem der vorhergehenden Ansprüche, **dadurch gekennzeichnet, daß** der bestimmte Kanal und der andere Kanal Verkehrskanäle sind.

7. Verfahren nach einem der Ansprüche 1-5, **dadurch gekennzeichnet, daß** der bestimmte Kanal ein Verkehrskanal ist, und daß der andere Kanal ein Bezugskanal ist.

8. Verfahren nach einem der Ansprüche 1-5, **dadurch gekennzeichnet, daß** der bestimmte Kanal und der andere Kanal Steuerkanäle sind.

9. Zellulares Funk-Kommunikationssystem mit einer Vielzahl von Mobilstationen, bei dem eine Bedingung für eine Übergabe einer Mobilstation von einer ersten zu einer zweiten Basisstation aus einer Messung eines Kurzzeit-Mittelwertes und eines Langzeit-Mittelwertes der Stärke eines empfangenen Signals bestimmt wird, wobei das System folgendes umfaßt:
eine Vielzahl von Basisstationen, wobei jede Basisstation eine Vielzahl von Kanälen aufweist, über die die Mobilstationen bedient werden,
Einrichtungen zur Bestimmung einer ersten Langzeit-Darstellung (301, 401, 411, 421) eines derzeitigen Signalpegels auf einem Kanal des Zellular-Kommunikationssystems,
Einrichtungen zur Bestimmung einer zweiten Kurzzeit-Darstellung (402, 405, 415, 425) des derzeitigen Signalpegels auf dem Kanal, **dadurch gekennzeichnet, daß** das System folgendes umfaßt:
Einrichtungen zum Vergleich der Langzeit-Darstellung mit einem ersten Schwellenwert (540, 640),
getrennt von den Langzeit-Vergleichseinrichtungen, Einrichtungen zum Vergleich der Kurzzeit-Darstellung mit einem zweiten Schwellenwert (550, 650), der von dem ersten Schwellenwert verschieden ist,
Einrichtungen zur Bestimmung (560, 660), ob eine Übergabe-Bedingung erfüllt ist, auf der Grundlage des Ergebnisses sowohl der Langzeit- und Kurzzeit-Vergleichseinrichtungen, und
Einrichtungen zur Einleitung einer Übergabe der Mobilstation, wenn die Übergabe-Bedingung erfüllt ist.

10. System nach Anspruch 9, **dadurch gekennzeichnet, daß**:
die Einrichtung zur Bestimmung einer Langzeit-Darstellung eine Langzeit-Darstellung eines Signalpegels auf einem Kanal bestimmt, der derzeit der Mobilstation zugeordnet ist,
die Einrichtung zur Bestimmung einer Kurzzeit-Darstellung eine Kurzzeit-Darstellung des Signalpegels auf dem derzeit zugeordneten Kanal bestimmt, und daß
die Einrichtung zur Bestimmung, ob die Übergabe-Bedingung erfüllt ist, nur dann bestimmt, daß die Übergabe-Bedingung erfüllt ist, wenn der erste Schwellenwert die Langzeit-Darstellung übersteigt und der zweite Schwellenwert die Kurzzeit-Darstellung übersteigt.

11. System nach Anspruch 10, **dadurch gekennzeichnet, daß**:
die Einrichtung zur Bestimmung einer Langzeit-Darstellung eine Langzeit-Darstellung eines Signalpegels auf einem anderen Kanal als dem bestimmt, der derzeit der Mobilstation zugeordnet ist,
die Einrichtung zur Bestimmung einer Kurzzeit-Darstellung eine Kurzzeit-Darstellung eines Signalpegels auf dem anderen Kanal bestimmt, und daß
die Einrichtung zur Bestimmung, ob die Übergabe-Bedingung erfüllt ist, nur dann die Erfüllung der Übergabe-Bedingung bestimmt, wenn die Langzeit-Darstellung den ersten Schwellenwert übersteigt und die Kurzzeit-Darstellung den zweiten Schwellenwert übersteigt.

12. System nach Anspruch 11, **dadurch gekennzeichnet, daß**:
die Einrichtung zur Bestimmung von Langzeit-Darstellungen zur Bestimmung von Langzeit-Darstellungen von Signalpegeln auf weiteren Kanälen betreibbar ist,
die Einrichtung zur Bestimmung von Kurzzeit-Darstellungen zur Bestimmung von Kurzzeit-Darstellungen von Signalpegeln auf den weiteren Kanälen betreibbar ist, und daß
die Einrichtung zur Bestimmung, ob die Übergabe-Bedingung erfüllt ist, zum Vergleich der Langzeit-Darstellungen und der Kurzzeit-Darstellungen der Signalpegel auf den weiteren Kanälen mit den ersten bzw. zweiten Schwellenwerten und zur Bestimmung betreibbar ist, daß die Übergabe-Bedingung erfüllt ist, wenn die Langzeit-Darstellung des Signalpegels auf einem der weiteren Kanäle den ersten Schwellenwert übersteigt und die Kurzzeit-Darstellung des Signalpegels auf dem gleichen weiteren Kanal den zweiten Schwellenwert übersteigt.

13. System nach Anspruch 10, **dadurch gekennzeichnet, daß** die Einrichtung zur Bestimmung der Langzeit-Darstellung, die Einrichtung zur Bestimmung der Kurzzeit-Darstellung, die Einrichtung zum Vergleich der Langzeit-Darstellung mit dem ersten Schwellenwert, die Einrichtung zum Vergleich der Kurzzeit-Darstellung mit dem zweiten Schwellenwert und die Einrichtung zur Bestimmung, ob die Übergabe-Bedingung erfüllt ist, in der Mobilstation befindlich sind.

14. System nach Anspruch 10, das weiterhin eine Basisstations-Steuer-einrichtung (201, 221) aufweist, **dadurch gekennzeichnet, daß** die Einrichtung zur Bestimmung der Langzeit-Darstellung, die Einrichtung zur Bestimmung der Kurzzeit-Darstellung, die Einrichtung zum Vergleich der Langzeit-Darstellung mit dem ersten Schwellenwert, die Einrichtung zum Vergleich der Kurzzeit-Darstellung mit dem zweiten Schwellenwert und die Einrichtung zur Bestimmung, ob die Übergabe-Bedingung erfüllt ist, in der Basisstations-Steuereinrichtung befindlich sind.

15. Mobilstation (250) zum Betrieb in einem Zellular-Funkkommunikationssystem, das eine Vielzahl von Mobilstationen umfaßt, wobei eine Bedingung für eine Übergabe einer Mobilstation von einer ersten zu einer zweiten Basisstation aus einer Messung eines Kurzzeit-Mittelwertes und eines Langzeit-Mittelwertes der Stärke eines empfangenen Signals bestimmt wird, wobei die Mobilstation folgendes umfaßt:
Einrichtungen zur Bestimmung einer ersten Langzeit-Darstellung (301, 401, 411, 421) eines derzeitigen Signalpegels auf einem Kanal des Zellular-Kommunikationssystems, der der Mobilstation zugeordnet ist,
Einrichtungen zur Bestimmung einer zweiten Kurzzeit-Darstellung (302, 405, 415, 425) des derzeitigen Signalpegels auf dem Kanal, **dadurch gekennzeichnet, daß** die Mobilstation folgendes umfaßt:
Einrichtungen zum Vergleich der Langzeit-Darstellung mit einem ersten Schwellenwert (540, 640),
getrennt von den Langzeit-Vergleichseinrichtungen, Einrichtungen zum Vergleich der Kurzzeit-Darstellung mit einem zweiten Schwellenwert (550, 650), der von dem ersten Schwellenwert verschieden ist,
Einrichtungen zur Bestimmung (560, 660), ob eine Übergabe-Bedingung erfüllt ist, auf der Grundlage des Ergebnisses sowohl der Langzeit- und der Kurzzeit-Vergleichseinrichtungen, und
Einrichtungen zur Einleitung einer Übergabe der Mobilstation, wenn die Übergabe-Bedingung erfüllt ist.

16. Basisstations-Steuereinrichtung (201, 221) für ein zellulares Funk-Kommunikationssystem mit einer Vielzahl von Mobilstationen (250), wobei eine Bedingung für eine Übergabe einer Mobilstation von einer ersten zu einer zweiten Basisstation aus einer Messung eines Kurzzeit-Mittelwertes und eines Langzeit-Mittelwertes der Stärke eines empfangenen Signals bestimmt wird, wobei die Basisstations-Steuereinrichtung folgendes umfaßt:
Einrichtungen zur Bestimmung einer ersten Langzeit-Darstellung (401, 411, 421) eines derzeitigen Signalpegels auf einem Kanal, der von der Basisstations-Steuereinrichtung gesteuert wird,
Einrichtungen zur Bestimmung einer zweiten Kurzzeit-Darstellung (405, 415, 425) des derzeitigen Signalpegels auf dem Kanal, **dadurch gekennzeichnet, daß** die Basisstations-Steuereinrichtung folgendes umfaßt:
Einrichtungen zum Vergleich der Langzeit-Darstellung mit einem ersten Schwellenwert (540, 640),
getrennt von den Langzeit-Vergleichseinrichtungen, Einrichtungen zum Vergleich der Kurzzeit-Darstellung mit einem zweiten Schwellenwert (550, 650), der von dem ersten Schwellenwert verschieden ist,
Einrichtungen zur Bestimmung (560, 660), ob eine Übergabe-Bedingung erfüllt ist, auf der Grundlage des Ergebnisses sowohl der Langzeit als auch Kurzzeit-Vergleichseinrichtungen, und
Einrichtungen zur Einleitung einer Übergabe einer Mobilstation, wenn die Übergabe-Bedingung erfüllt ist.

## Revendications

1. Procédé pour déterminer une condition de transfert d'un appel téléphonique sur un canal particulier vers un autre canal d'une station mobile (250) entre des première et seconde stations de base dans un système de communications sans fil comportant une pluralité de stations mobiles, ladite condition de transfert étant déterminée à partir d'une mesure d'une moyenne à court terme et d'une moyenne à long terme de la force d'un signal reçu, le procédé comportant les étapes consistant à :
déterminer une première représentation à long terme (301, 401, 411, 421) d'un niveau de signal courant sur un canal du système de communications sans fil,
déterminer une seconde représentation à court terme (302, 405, 415, 425) du niveau de signal courant, caractérisé par les étapes consistant à
comparer la représentation à long terme et un premier seuil (540, 640),
séparément de ladite étape de comparaison à long terme, comparer la représentation à court terme et un second seuil (550, 650) qui est différent du premier seuil,
déterminer (560, 660) si une condition de transfert a été atteinte sur la base du résultat desdites deux étapes de comparaison à long terme et à court terme, et
initialiser ledit transfert lorsque ladite condition de transfert a été atteinte.

2. Procédé selon la revendication 1, **caractérisé en ce que** l'étape de comparaison à long terme comporte l'étape consistant à fournir le second seuil.

3. Procédé selon la revendication 1, **caractérisé en ce que** :
l'étape de détermination d'une représentation à long terme d'un niveau de signal comporte la détermination d'une représentation à long terme d'un niveau de signal sur ledit canal particulier,
l'étape consistant à déterminer une représentation à court terme d'un niveau de signal comporte la détermination d'une représentation à court terme d'un niveau de signal sur ledit canal particulier, et **en ce que**
l'étape de détermination pour savoir si ladite condition de transfert a été atteinte comporte la détermination que ladite condition de transfert a été atteinte uniquement si le premier seuil dépasse la représentation à long terme et le second seuil dépasse la représentation à court terme.

4. Procédé selon la revendication 1, **caractérisé en ce que**
l'étape de détermination d'une représentation à long terme d'un niveau de signal comporte la détermination d'une représentation à long terme d'un niveau de signal sur ledit autre canal,
l'étape de détermination d'une représentation à court terme d'un niveau de signal comporte la détermination d'une représentation à court terme d'un niveau de signal sur ledit autre canal, et **en ce que**
l'étape de détermination pour savoir si ladite condition de transfert a été atteinte comporte la détermination que ladite condition de transfert a été atteinte uniquement si la représentation à long terme dépasse le premier seuil et la représentation à court terme dépasse le second seuil.

5. Procédé selon la revendication 1, **caractérisé** de plus par :
la détermination de représentations à long terme de niveaux de signal sur des canaux supplémentaires,
la détermination de représentations à court terme de niveaux de signal sur lesdits canaux supplémentaires,
la comparaison des représentations à long terme et des représentations à court terme des niveaux de signal sur lesdits canaux supplémentaires et desdits premier et second seuils, respectivement, et
la détermination que ladite condition de transfert a été atteinte si la représentation à long terme du niveau de signal sur l'un quelconque desdits canaux supplémentaires dépasse le premier seuil et la représentation à court terme du niveau de signal sur le même canal supplémentaire dépasse le second seuil.

6. Procédé selon l'une quelconque des revendications précédentes, **caractérisé en ce que** le canal particulier et l'autre canal sont des canaux de trafic.

7. Procédé selon l'une quelconque des revendications 1 à 5, **caractérisé en ce que** le canal particulier est un canal de trafic et l'autre canal est un canal de référence.

8. Procédé selon l'une quelconque des revendications 1 à 5, **caractérisé en ce que** le canal particulier et l'autre canal sont des canaux de commande.

9. Système de communications sans fil cellulaire comportant une pluralité de stations mobiles, dans lequel une condition de transfert d'une station mobile depuis une première station de base vers une seconde station de base est déterminée à partir d'une mesure d'une moyenne à court terme et d'une moyenne à long terme de la force d'un signal reçu, le système comportant :
une pluralité de stations de base, chaque station de base ayant une pluralité de canaux de manière à desservir lesdites stations mobiles,
des moyens pour déterminer une première représentation à long terme (301, 401, 411, 421) d'un niveau de signal courant sur un canal du système de communications cellulaire,
des moyens pour déterminer une seconde représentation à court terme (302, 405, 415, 425) du niveau de signal courant sur ledit canal, **caractérisé en ce que** le système comporte
des moyens pour comparer la représentation à long terme et un premier seuil (540, 640),
séparément desdits moyens de comparaison à long terme, des moyens pour comparer la représentation à court terme et un second seuil (550, 650) qui est différent du premier seuil,
des moyens pour déterminer (560, 660) si une condition de transfert a été atteinte sur la base du résultat desdits moyens de comparaison à long terme et à court terme, et
des moyens pour initialiser un transfert de ladite station mobile lorsque ladite condition de transfert a été atteinte.

10. Système selon la revendication 9, **caractérisé en ce que** :
les moyens pour déterminer une représentation à long terme déterminent une représentation à long terme d'un niveau de signal sur un canal attribué actuellement à la station mobile,
les moyens pour déterminer la représentation à court terme déterminent une représentation à court terme du niveau de signal sur ledit canal actuellement attribué, et **en ce que**
les moyens pour déterminer si ladite condition de transfert a été atteinte déterminent que ladite condition de transfert a été atteinte uniquement si le premier seuil dépasse la représentation à long terme et le second seuil dépasse la représentation à court terme.

11. Système selon la revendication 10, **caractérisé en ce que**
les moyens pour déterminer une représentation à long terme déterminent une représentation à long terme d'un niveau de signal sur un canal autre qu'un canal actuellement attribué à la station mobile,
les moyens pour déterminer une représentation à court terme déterminent une représentation à court terme d'un niveau de signal sur ledit autre canal, et **en ce que**
les moyens pour déterminer si ladite condition de transfert a été atteinte déterminent que ladite condition de transfert a été atteinte uniquement si la représentation à long terme dépasse le premier seuil et la représentation à court terme dépasse le second seuil.

12. Système selon la revendication 11, **caractérisé en ce que** :
les moyens pour déterminer des représentations à long terme sont opérationnels pour déterminer des représentations à long terme de niveaux de signal sur des canaux supplémentaires,
les moyens pour déterminer des représentations à court terme sont opérationnels pour déterminer des représentations à court terme de niveaux de signal sur lesdits canaux supplémentaires, et **en ce que**
les moyens pour déterminer si ladite condition de transfert est atteinte sont opérationnels pour comparer les représentations à long terme et les représentations à court terme des niveaux de signal sur lesdits canaux supplémentaires et lesdits premier et second seuils, respectivement, et pour déterminer que ladite condition de transfert a été atteinte si la représentation à long terme du niveau de signal sur l'un quelconque desdits canaux supplémentaires dépasse le premier seuil et la représentation à court terme du niveau de signal sur le même canal supplémentaire dépasse le second seuil.

13. Système selon la revendication 10, **caractérisé en ce que** les moyens pour déterminer la représentation à long terme, les moyens pour déterminer la représentation à court terme, les moyens pour comparer la représentation à long terme et le premier seuil, les moyens pour comparer la représentation à court terme et le second seuil, et les moyens pour déterminer si ladite condition de transfert a été atteinte, se trouvent dans la station mobile.

14. Système selon la revendication 10, comportant de plus un contrôleur de station de base (201, 221), **caractérisé en ce que** les moyens pour déterminer la représentation à long terme, les moyens pour déterminer la représentation à court terme, les moyens pour comparer la représentation à long terme et le premier seuil, les moyens pour comparer la représentation à court terme et le second seuil, et les moyens pour déterminer si ladite condition de transfert a été atteinte, se trouvent dans le contrôleur de station de base.

15. Station mobile (250) pour une opération dans un système de communications cellulaire sans fil comportant une pluralité de stations mobiles, dans laquelle une condition de transfert d'une station mobile depuis une première station de base vers une seconde station de base est déterminée à partir d'une mesure d'une moyenne à court terme et d'une moyenne à long terme de la force d'un signal reçu, la station mobile comportant :
des moyens pour déterminer une première représentation à long terme (301, 401, 411, 421) d'un niveau de signal courant sur un canal du système de communications cellulaire qui est attribué à la station mobile,
des moyens pour déterminer une seconde représentation à court terme (302, 405, 415, 425) du niveau de signal courant sur ledit canal, **caractérisé en ce que** la station mobile comporte
des moyens pour comparer la représentation à long terme et un premier seuil (540, 640),
séparément desdits moyens de comparaison à long terme, des moyens de comparaison de la représentation à court terme et un second seuil (550, 650) qui est différent du premier seuil,
des moyens pour déterminer (560, 660) si une condition de transfert a été atteinte sur la base du résultat desdits moyens de comparaison à long terme et à court terme, et
des moyens pour initialiser un transfert de ladite station mobile lorsque ladite condition de transfert a été atteinte.

16. Contrôleur de station de base (201, 221) pour un système de communications cellulaire sans fil comportant une pluralité de stations mobiles (250), dans lequel une condition de transfert d'une station mobile depuis une première station de base vers une seconde station de base est déterminée à partir d'une mesure d'une moyenne à court terme et d'une moyenne à long terme de la force d'un signal reçu, le contrôleur de station de base comportant :
des moyens pour déterminer une première représentation à long terme (401, 411, 421) d'un niveau de signal courant sur un canal commandé par le contrôleur de station de base,
des moyens pour déterminer une seconde représentation à court terme (405, 415, 425) du niveau de signal courant sur ledit canal, **caractérisé en ce que** le contrôleur de station de base comporte
des moyens pour comparer la représentation à long terme et un premier seuil (540, 640),
séparément desdits moyens de comparaison à long terme, des moyens pour comparer la représentation à court terme et un second seuil (550, 650) qui est différent du premier seuil,
des moyens pour déterminer (560, 660) si une condition de transfert a été atteinte sur la base du résultat desdits moyens de comparaison à long terme et à court terme, et
des moyens pour initialiser un transfert d'une station mobile lorsque ladite condition de transfert a été atteinte.
